Europäisches Patentamt

European Patent Office

Office européen des brevets

(19)

(11) EP 0 624 888 B1

(12) FASCICULE DE BREVET EUROPEEN

(45) Date de publication et mention de la délivrance du brevet:
01.05.1996 Bulletin 1996/18

(51) Int Cl.⁶: **H01G 4/02**

(21) Numéro de dépôt: 94401023.0

(22) Date de dépôt: 09.05.1994

(54) **Condensateur à haute stabilité thermique**

Kondensator mit hoher thermischer Stabilität

Capacitor with high thermal stability

(84) Etats contractants désignés:
AT CH DE FR GB IT LI SE

(30) Priorité: 13.05.1993 FR 9305766

(43) Date de publication de la demande:
17.11.1994 Bulletin 1994/46

(73) Titulaire: **GEC ALSTHOM T ET D SA**
**F-75016 Paris (FR)**

(72) Inventeurs:
• **Dupraz, Jean-Pierre**
**F-69003 Lyon (FR)**
• **Gris, Jean-Paul**
**F-69005 Lyon (FR)**
• **Trenchat, Daniel**
**F-38230 Tignieu Jameyzieu (FR)**

(74) Mandataire: **Fournier, Michel et al**
**SOSPI**
**14-16, rue de la Baume**
**F-75008 Paris (FR)**

(56) Documents cités:
FR-A- 2 651 889          US-A- 3 646 412

## Description

La présente invention est relative à un condensateur destiné notamment à équiper un dispositif pour la mesure précise d'une tension électrique à l'intérieur d'un appareil électrique avec enveloppe métallique à la terre isolé à l'hexafluorure de soufre SF6. Un tel condensateur est, par exemple, connu de US-A-3 646 412. Un tel dispositif de mesure de tension est décrit dans le document EP-A-0 431 542.

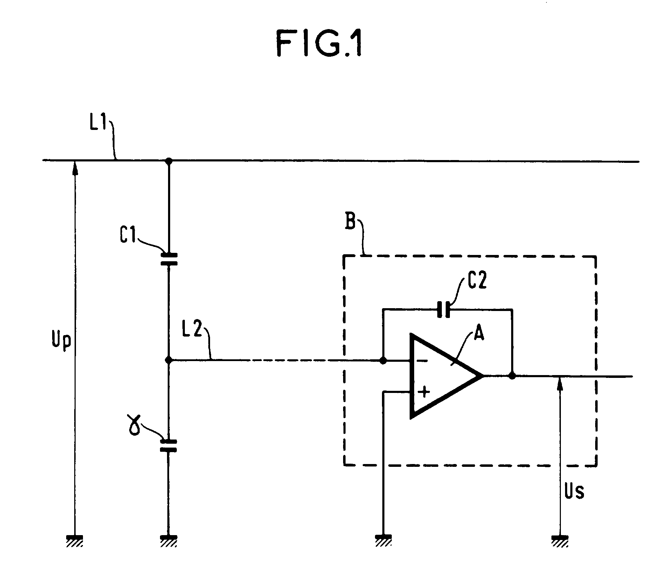

La figure 1 annexée au présent mémoire illustre le montage électronique réalisé pour obtenir une image de la tension à mesurer.

La ligne L1 désigne le conducteur à haute tension dont on souhaite mesurer la tension Up.

Le montage comprend un premier condensateur C1, dit condensateur haute tension relié, par un câble de liaison L2 à l'entrée négative d'un amplificateur opérationnel A muni d'un second condensateur C2 entre sa sortie et sa borne d'entrée négative. La borne positive de l'amplificateur opérationnel est relié à la masse. Le condensateur $\gamma$ représente l'ensemble des capacités parasites comprenant notamment la capacité du câble de liaison L2 et la capacité formée par l'armature basse tension et la masse; la capacité du câble L2 n'est pas négligeable, puisque l'amplificateur opérationnel A est situé dans un local de mesure B qui peut être distant de plusieurs dizaines de mètres de l'endroit où est placé le condensateur haute tension C1.

La tension de sortie Us de l'amplificateur opérationnel est une image de la tension à mesurer puisque ces deux grandeurs sont liées par la relation:

$$Up = - Us.C2/C1$$

Pour que l'image Us soit indépendante de la température, il est nécessaire que le rapport C2/C1 soit indépendant de la température.

Le condensateur C2 se trouve dans le local de mesure et il est facile de le disposer dans une enceinte régulée en température.

Mais le condensateur C1 est placé dans l'appareil ou à proximité de ce dernier; or, l'appareil est souvent en plein air et la température peut varier dans des limites importantes, par exemple de - 50°C à + 60°C.

La précision de la mesure dépend donc de la variation de la capacité du condensateur C2 avec la température. Pour obtenir une mesure précise de la tension Us quelle que soit la température à laquelle est soumise le condensateur C1, il faut que la capacité de ce dernier soit indépendante de la température.

Un premier but de l'invention est de réaliser un condensateur dont la valeur de la capacité est indépendante de la température.

Un autre but de l'invention est de réaliser un condensateur de fabrication aisée et de prix de revient peu élevé.

Un autre but de l'invention est de réaliser un condensateur tel que sa capacité parasite par rapport à la masse soit très faiblement inductive, de façon à offrir un chemin privilégié pour l'écoulement des signaux à très haute fréquence présents au niveau de l'électrode basse tension.

Ces buts sont atteints par le condensateur de l'invention tel que défini dans les revendications.

L'invention est maintenant expliquée de manière plus approfondie par la description d'un exemple de réalisation, en référence au dessin annexé dans lequel:

- la figure 1 est un schéma d'un dispositif de mesure de tension
- la figure 2 est une vue en perspective d'un capteur capacitif réalisé conformément à l'invention,

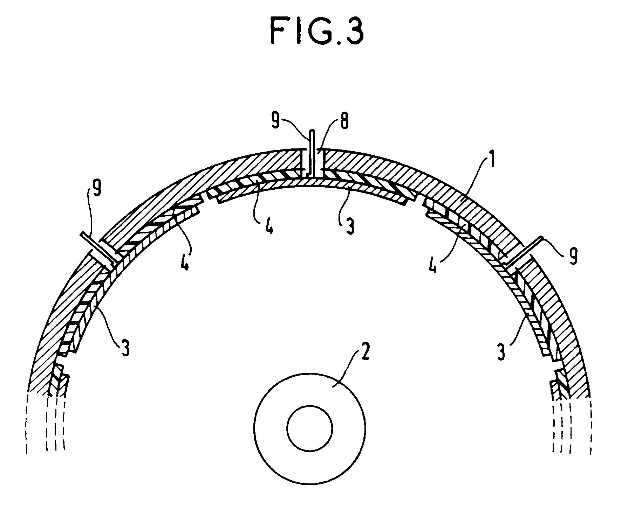

- la figure 3 est une vue partielle en coupe transversale du capteur de la figure 2,
- la figure 4 est une vue partielle en coupe transversale d'une partie du condensateur, montrant un premier mode de réalisation de la fixation des électrodes BT,
- la figure 5 est une vue partielle en coupe axiale d'une partie du condensateur, illustrant le même mode de fixation des électrodes BT que celui montré dans la figure 4,
- la figure 6 est une vue partielle en coupe transversale d'une partie du condensateur, montrant un second mode de réalisation de la fixation des électrodes BT,
- la figure 7 est une vue partielle en coupe axiale d'une partie du condensateur, illustrant le même mode de fixation des électrodes BT que celui montré dans la figure 6,
- la figure 8 est une vue partielle en coupe transversale d'une partie du condensateur, montrant un troisième mode de réalisation de la fixation des électrodes BT,
- la figure 9 est une vue partielle en coupe axiale d'une partie du condensateur, illustrant le même mode de fixation des électrodes BT que celui montré dans la figure 8,
- la figure 10 est une vue partielle d'un poste blindé à l'intérieur duquel est placé un condensateur selon l'invention,
- la figure 11 est une vue partielle en coupe transversale d'une partie du condensateur, montrant un quatrième mode de réalisation de la fixation des électrodes BT,
- la figure 12 est une vue partielle en coupe axiale d'une partie du condensateur, illustrant le même mode de fixation des électrodes BT que celui montré dans la figure 11.

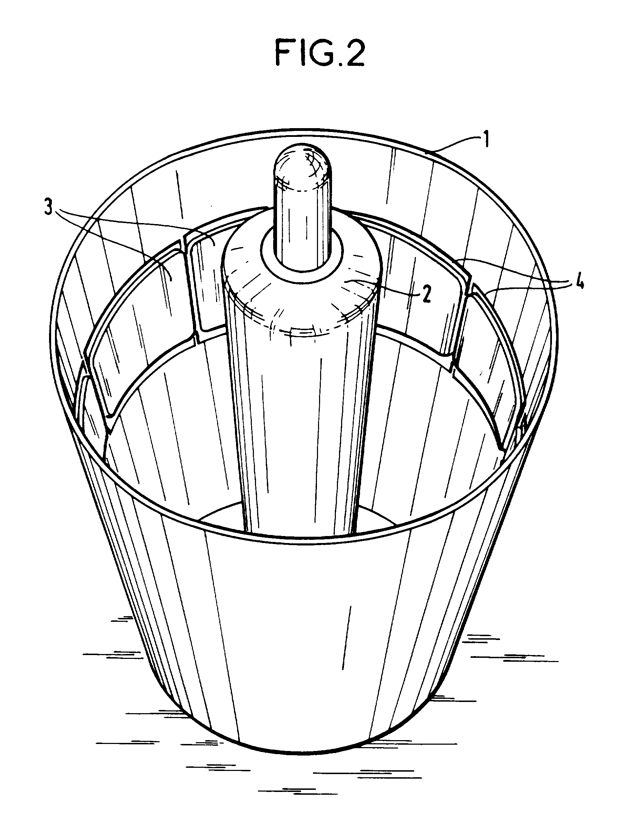

Le condensateur représenté dans la figure 2 comprend un corps cylindrique externe 1 (désigné par la suite, pour simplifier par, corps). Le corps est réalisé dans un matériau dont le coefficient de dilatation linéaire **ac** est connu avec précision. Le matériau est de préférence un métal, mais peut également être un matériau isolant, plastique ou composite, métallisé. Dans le cas où le matériau est en métal, on choisit par exemple un alliage d'aluminium.

Le corps 1 sert de support aux électrodes basse tension qui seront décrite plus loin.

Le condensateur comprend une électrode interne 2 destinée à être reliée à la haute tension HT. C'est la raison pour laquelle cette électrode 2 sera désignée dans la suite par électrode HT. Cette électrode est un cylindre réalisé dans un matériau dont le coefficient de dilatation linéaire **ah** est connu avec précision. Comme pour le corps, le matériau de l'électrode HT est un métal ou un isolant métallisé. De préférence, le matériau de l'électrode HT sera choisi identique à celui du corps.

Le corps et l'électrode HT sont disposés coaxialement et maintenus fixes l'un par rapport à l'autre par des moyens qui seront décrits plus loin.

Le corps sert de support à un certain nombre d'électrodes 3, (appelées dans la suite électrodes BT car elles sont placée du côté de la basse tension BT). Les électrodes BT sont réalisées de préférence au moyen de feuilles d'un métal ou alliage métallique dont le coefficient de dilatation linéaire **ab** est connu avec précision. Ce matériau peut être avantageusement choisi parmi les aciers inoxydables.

Chaque électrodes BT est séparée du corps par une feuille 4 en matériau isolant, de coefficient de dilatation linéaire **af**. Le matériau isolant est choisi de préférence parmi les films silicones, les polypropylènes, les matériaux connus sous les marques déposées mylar et téflon, et en particulier parmi ceux qui résistent aux produits de décomposition de l'hexafluorure de soufre.

L'ensemble est placé soit dans le vide, soit dans un milieu diélectrique permettant la libre dilatation de tous ses éléments constitutifs. Le plus couramment, le capteur sera placé dans l'hexafluorure de soufre SF6 qui règne à l'intérieur d'un appareil ou poste du type à enveloppe métallique à la terre (type connu aussi sous le vocable blindé).

Comme le montre la figure 2, les électrodes BT sont de préférence rectangulaires ou carrées, à coins arrondis, et plaquées contre la surface intérieure du corps au moyen de dispostifs mécaniques qui permettent leur libre dilatation sous l'effet de la température. Diverses variantes de réalisation de ces dispositifs sont décrits dans la suite.

Le corps est muni de trous 8 pour permettre le soudage de pattes métalliques 9 de connexion.

L'électrode HT définit avec chaque électrode BT un condensateur élémentaire dont le diélectrique est constitué par le milieu défini plus haut. Les divers condensateurs élémentaires seront connectés électriquement pour réaliser le condensateur C1 dont il a été question en référence à la figure 1, pour réaliser le dispositif de mesure de tension.

Le nombre d'électrodes BT et leur dispositions à l'intérieur du corps sont choisis pour permettre de les grouper en formant une figure connexion symétrique.

On peut ainsi constituer les groupes suivants:

- deux électrodes BT à 180 degrés l'une de l'autre,
- trois électrodes BT à 120 degrés les unes des autres,
- quatre électrodes BT placées deux à deux à 90 degrés l'une de l'autre,
- etc..

De plus, les électrodes peuvent être groupées de façon à réaliser des condensateurs indépendants. Un mode préférentiel est formé de 8 électrodes BT identiques réparties symétriquement sur le corps, selon une progression angulaire de 45 degrés. Les électrodes sont groupées par 4, chaque groupe constituant avec l'électrode HT un condensateur C1, ce qui permet d'assurer un circuit de mesure redondant. Les deux condensateurs C1 ainsi formés sont imbriqués avec des électrodes BT réparties selon une progression angulaire de 90 degrés.

On va montrer qu'un choix adéquat des matériaux permet d'obtenir une valeur de C1 dont la dépendance avec la température est proche de zéro.

La capacité est donnée en première approximation par la relation:

$$C1 = 2\pi . \ Eo.Er.N.(S/De)/Ln(De/d)$$

dans laquelle:

Ln désigne le logarithme népérien

$$De = D - 2 \ (hf + he)$$

avec:

Eo : permittivité du vide

Er : permittivité du diélectrique de C1

N : nombre d'électrodes BT connectées en parallèle

S : surface d'une électrode

D : diamètre intérieur du corps

d : diamètre de l'électrode HT

he : épaisseur d'une électrode BT

hf : épaisseur du film isolant

Sous l'action de la température, ces différentes grandeurs varient selon les lois approximatives suivantes:

$$D = Do \ (1 + ac \ (T - To))$$
$$d = do \ (1 + ah \ ( T - To))$$
$$S = So \ (1 + ab \ ( T - To))^2$$
$$he = heo(1 + ab \ ( T - To))$$
$$hf = hfo(1 + af \ ( T - To))$$

T est la température du capteur pour laquelle le calcul est effectué,

To est une température de référence,

Do, do, So, heo et hfo sont les valeurs respectives de D, d, S, he et hf à la température de référence.

Si le corps et l'électrode HT sont faits du même matériau, sont soumis à la même température et si la somme he+hf est très inférieure à D/2, ce qui est le cas le général, la formule donnant la valeur de C1 en fonction de la température devient:

$$C1(T) = C1(To).(1 + ab(T - To))^2 / (1 + ac(T - To))$$

Si $(ab (T - To))^2$ est très inférieur à 1, ce qui est une condition presque toujours vérifiée, la relation devient:

$$C1(T) = C1(To).(1 + 2ab(T - To))/ (1 + ac(T - To))$$

Si les matériaux du corps et des électrodes BT sont tels que $ac = 2 ab$, la relation devient:

$$C1(T) = C1(To)$$

ce qui montre que la capacité C1 ne dépend plus de la température.

Il n'est pas nécessaire d'obtenir une dérive rigoureusement nulle dans les applications envisagées. Un calcul fait sans approximation montre que, sous réserve que le coefficient de dilatation **ah** du matériau de l'électrode haute tension soit égal au coefficient de dilatation ac du corps, il existe une fenêtre de valeurs de **ab** et **ah** ($=$**ac**) telle que la dérive thermique du condensateur soit réduite à son minimum.

Pour les matériaux courants utilisables, cette fenêtre est telle qu'elle vérifie les inégalités ci-après:

$$1,5 < \frac{ab}{ac} < 2,5$$

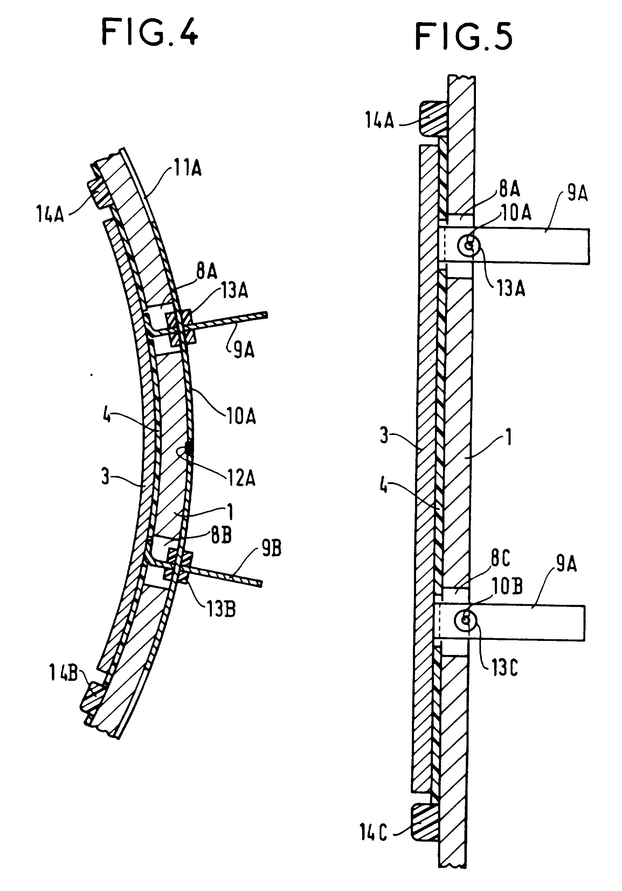

Les figures 4 et 5 montrent un premier mode de fixation des électrodes BT sur le corps. Pour faciliter la compréhension du dessin, les échelles des épaisseurs n'ont pas été respectées.

Le corps possède par exemple quatre ouvertures 8 disposées selon un rectangle ou un carré, et par lesquelles passent quatre pattes 9 soudées à l'électrode BT 3. Sont visibles dans les figures 4 et 5, les pattes 9A, 9B et 9C, traversant les ouvertures 8A, 8B et 8C respectivement. Les pattes sont traversées deux par deux par un ressort du type corde à piano, incurvé de manière circulaire avec une courbure égale ou légèrement inférieure à celle du corps 1.

Ainsi, les pattes 9A et 9B, disposées sur une section droite du cylindre 1, sont traversées par le ressort 10A, qui est disposé avantageusement dans une gorge 11A pratiquée dans le corps 1. Le ressort 10A est soudé, sensiblement en son milieu 12A au corps 1. Des manchons isolants 13A et 13B isolent électriquement le ressort 10A des pattes dont certaines sont utilisées comme connexions électriques.

Les pattes 9C et 9D (cette dernière n'est pas visible dans les figures 4 et 5) sont, de la même manière , traversées par un ressort 10B dont on voit la trace dans la figure 5. On aperçoit également un manchon isolant 13C qui isole électriquement le ressort 10B et la patte 9C.

Les ressorts 10A et 10B exercent une force légère qui maintient l'électrode BT 3 plaquée contre le corps, via l'isolant 4, tout en l'autorisant à se dilater librement.

Des pions isolants tels que 14A, 14B et 14C permettent de limiter le débattement de l'électrode BT 3.

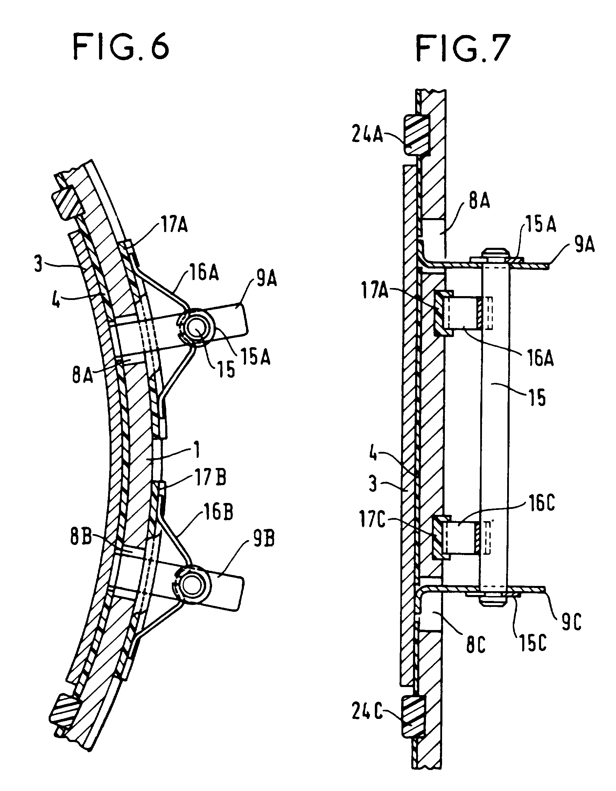

Les figures 6 et 7 illustrent un second mode de réalisation des moyens de fixation des plaques. Là encore, le corps est percé de quatre ouvertures 8A, 8B, 8C, etc.. par lesquelles passent des pattes métalliques 9A, 9B, 9C; les pattes sont reliées deux à deux par des tiges; ainsi, les pattes 9A et 9C sont reliées par une tige 15 traversant les pattes et bloquée par des circlips 15A et 15C; les pattes 9A et 9C sont alignées sur une génératrice du cylindre 1; des ressorts métalliques 16A et 16C, s'appuient d'une part sur le corps 1 par l'intermédiaire de plots isolants 17A, 17C disposés dans des rainures extérieures du corps 1, et, d'autre part, contre la tige 15, en exerçant sur cette dernière une pression radiale et centrifuge, tendant donc à tirer sur les pattes 9A et 9C. Le maintien de l'électrode BT est ainsi assuré, tout en lui laissant la liberté de se dilater dans son plan. Des plots isolants tels que 24A et 24C, encastrés dans des rainures intérieures du corps 1 limitent le débattement de l'électrode BT 3. Dans une variante non représentée, les plots isolants 17A, 17B sont supprimés, l'isolement étant assuré par le matériau de la tige, qui est par exemple en fibre de verre imprégné de résine; les ressorts sont alors directement en contact dans des rainures extérieures du corps 1.

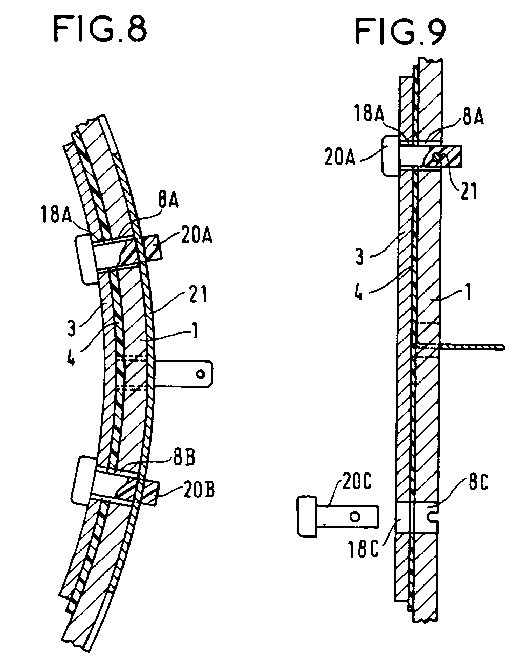

Un troisième exemple de fixation des électrodes basse tension est représenté dans les figures 8 et 9. Le corps 1, l'électrode basse tension 3 et son isolement 4 sont percés de trous en coïncidence, comme par exemple les trous 8A, 8B et 8C dans le corps et 18A et 18C dans l'électrode 3 et la couche isolant 4. Dans ces trous sont engagés des pions tels que 20A, 20B et 20c, réalisés en matériau isolant et possédant une tête et une tige. Les pions sont reliés 2 à 2 par un ressort 21 du type corde à piano, comme celui mentionné en regard des figures 4 et 5. Les trous dans les électrodes BT sont supérieurs au diamètre des tiges, pour assurer la libre dilatation des électrodes BT.

Cette réalisation est très simple; les trous dans les électrodes et la présence des pions contribuent à déterminer la valeur de la capacité du condensateur, mais celle-ci reste bien constante en fonction de la température. Il n'est plus nécessaire de disposer de plots pour limiter le débattement des électrodes BT.

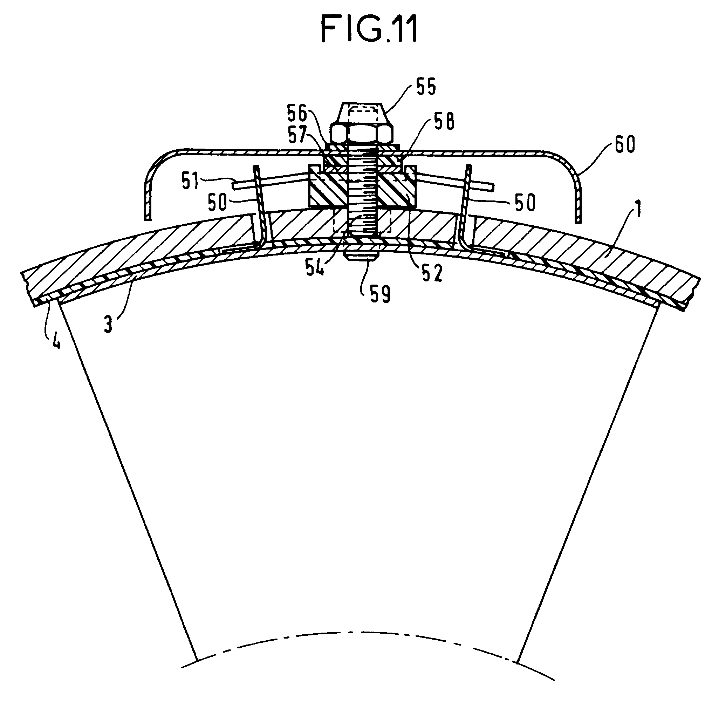

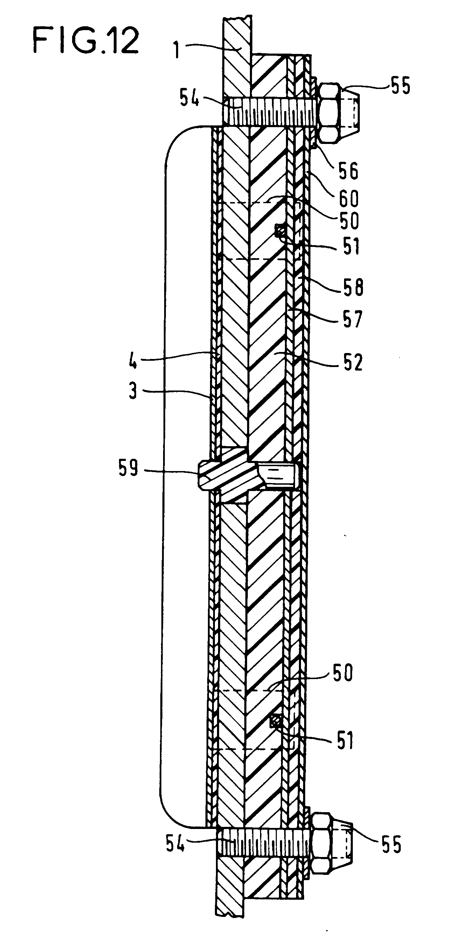

Un quatrième mode de fixation des électrodes BT est illustré dans les figures 11 et 12. Les éléments communs à ces figures et aux figures précédentes ont reçu les mêmes numéros de référence.

Aux électrodes BT 3 sont soudées des pattes métalliques 50 courbées à angle droit qui traversent le corps par des trous; l'extrémité des pattes est munie d'un trou; les pattes coopérent deux à deux en recevant dans leur trou d'extrémité, une corde à piano 51 qui s'appuie sur une barrette isolante 52. La barrette 52 est maintenue sur le corps 1 au moyen de tiges filetées 54, vissées dans l'épaisseur du corps 1, et d'écrous de serrage 55 avec rondelles 56.

Une prise de courant, formée d'une bande métallique 57, permet de recueillir le courant des électrodes BT en passant par les pattes 50 et la corde à piano 51. Cette prise de courant est isolée par une bande isolante 58.

Les électrodes BT sont centrées au moyen de pions isolants 59.

Enfin, un capot métallique 60 permet de régulariser les équipotentielles au voisinage de cet ensemble de prise de courant.

L'invention s'applique en particulier à la réalisation d'un dispositif de mesure de tension dans une installation électrique avec enveloppe métallique à la terre.

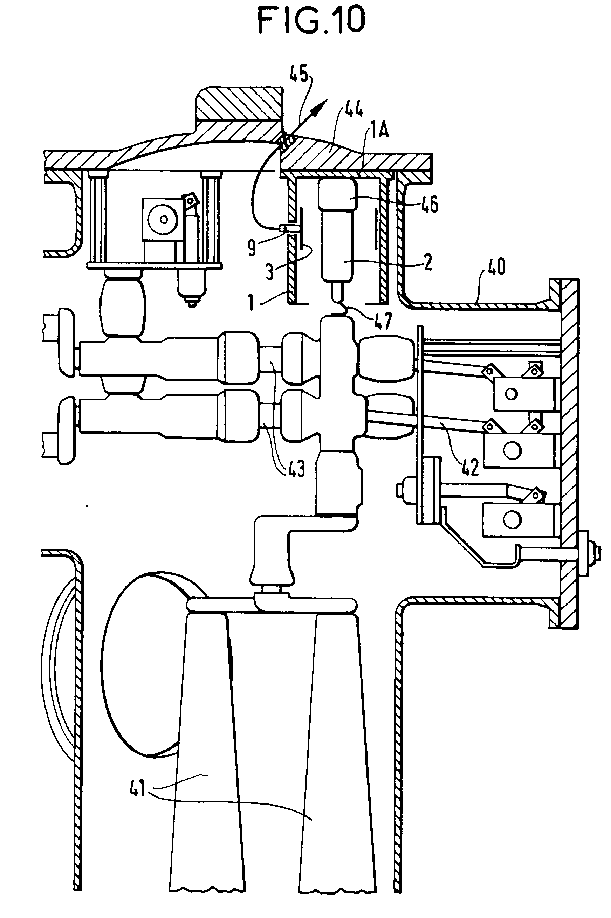

La figure 10 illustre une application du condensateur pour la mesure de la tension à l'intérieur d'un poste blindé. La figure 10 représente une extrémité d'un poste blindé isolé au gaz SF6; on distingue une enveloppe métallique 40, à la terre, remplie de SF6 sous pression, des arrivées de câbles 41, des sectionneurs de terre 42 et des sectionneurs de barres 43. L'espace disponible au-dessus des extrémités des sectionneurs de barres permet de loger les condensateurs C1 de l'invention (un condensateur C1 par phase), la tension étant mesurée à l'extrémité de chacun des sectionneurs de barres.

Un seul des trois condensateurs est représenté dans la figure 10.

Le corps 1 du condensateur est muni d'un fond métallique 1A soudé au couvercle métallique 44 qui ferme la partie supérieure de l'enveloppe. Les pattes de connexion 9 sont reliées à des fils électriques 45 qui sortent à l'extérieur de l'enveloppe par un passage étanche.

L'électrode haute tension est solidarisée au fond 1A par l'intermédiaire d'un isolateur 46 et est reliée au conducteur dont on mesure la tension par une connexion 47.

Bien que l'application principale de l'invention concerne la réalisation des dispositifs de mesure de tension à réducteur capacitif, l'invention trouve application toutes les fois que l'emploi d'un condensateur à haute stabilité thermique est exigé.

**Revendications**

1. Condensateur à haute stabilité thermique comprenant un corps métallique cylindrique (1), une électrode haute tension (2) cylindrique, coaxiale au corps et placée à l'intérieur de celui-ci, et au moins deux électrodes basse tension (3) assujetties à rester en contact contre la paroi intérieure du corps avec interposition d'une couche isolante (4), lesdites électrodes étant disposées symétriquement par rapport à l'axe géométrique du corps, lesdites électrodes basse tension (3) étant maintenues par des moyens les autorisant à se dilater librement, le milieu diélectrique compris entre les électrodes haute (2) et basse (3) tension étant un gaz ou le vide, le coefficient de dilatation **ac** du corps étant égal au coefficient de dilatation **ah** de l'électrode haute tension, le coefficent de dilatation **ac** du matériau du corps étant relié au coefficient de dilatation **ab** du matériau des électrodes basse tension (3) par les inégalités :

$$1,5 < \frac{ab}{ac} < 2,5$$

2. Condensateur selon la revendication 1, caractérisé en ce que le matériau du corps (1) est choisi parmi les alliages d'aluminium.

3. Condensateur selon l'une des revendications 1 et 2, caractérisé en ce que le matériau des électrodes basse tension (3) est choisi parmi les aciers inoxydables.

4. Condensateur selon l'une des revendications 1 à 3, caractérisé en ce qu'il comprend quatre paires d'électrodes basse tension (3).

5. Condensateur selon l'une des revendications 1 à 4, caractérisé en ce qu'à chaque électrode basse tension (3) est fixée au moins une patte métallique (9), traversant un trou (8) du corps, l'une au moins desdites pattes étant utilisée pour sa connexion électrique.

6. Condensateur selon l'une des revendications 1 à 5, caractérisé en ce que lesdits moyens comprennent au moins un ressort (10A, 10B) de type corde à piano, solidarisé en son milieu à la paroi extérieure du corps (1), et traversant deux desdites pattes (9A, 9B) disposées selon une même section droite du corps.

7. Condensateur selon la revendication 6, caractérisé en ce que ledit ressort (10A) est disposé dans une rainure (IIA) pratiquée à la surface extérieure du corps (1).

8. Condensateur selon l'une des revendications 6 et 7, caractérisé en ce que les pattes et les ressorts sont isolés électriquement les uns des autres, en particulier par des manchons isolants (13A, 13B).

9. Condensateur selon l'une des revendications 1 à 5, caractérisé en ce que lesdits moyens comprennent au moins une tige (15) traversant deux desdites pattes (9A, 9C) disposées selon une génératrice du corps et des ressorts (16A, 16C) s'appuyant d'une part sur le corps (1), d'autre part sur la tige (15) pour exercer sur les pattes un effort centrifuge et radial.

10. Condensateur selon la revendication 1, caractérisé en ce que les moyens de maintien des électrodes basse tension (3) comprennent des pattes métalliques (50) traversant le corps (1) et coopérant deux à deux avec une corde à piano (51) s'appuyant sur une barrette isolante (52) fixée à la surface extérieure du corps (1).

**11.** Condensateur selon l'une des revendications 1 à 10, caractérisé en ce que le corps porte, sur sa face interne, des plots (14A, 14C, 24A, 24C) pour limiter le déplacement des électrodes basse tension.

**12.** Condensateur selon l'une des revendications 1 à 5, caractérisé en ce que les moyens comprennent au moins une paire de pions isolants (20A, 20B, 20C) possédant chacun une tige et une tête et disposés selon une section droite du cylindre constituant le corps (1), lesdites tiges traversant les électrodes basse tension et le corps par des trous qui y sont pratiqués, les têtes étant placées du côté intérieur du corps (1), les deux pions d'une même paire étant traversés par un ressort (21) du type corde à piano.

**13.** Poste blindé comprenant une enveloppe métallique étanche remplie de gaz diélectrique sous pression à l'intérieur de laquelle sont disposés des appareils tels que des sectionneurs, un disjoncteur et des jeux de barres, ledit poste étant muni d'un réducteur capacitif comprenant deux condensateurs et un amplificateur opérationnel pour la mesure de la tension d'un desdits appareils, caractérisé en ce que l'un (C1) desdits condensateurs est réalisé selon l'une des revendications 1 à 12.

**14.** Condensateur selon la revendication 13, caractérisé en ce que le corps du condensateur (C1) possède un fond métallique (1A) soudé à l'intérieur de l'enveloppe sur une paroi de celle-ci, l'électrode haute tension (1) étant fixée audit fond (IA) par l'intermédiaire d'un isolateur (46) et relié par une connexion (47) à l'appareil électrique (43) dont on mesure la tension.

**Patentansprüche**

**1.** Kondensator hoher thermischer Stabilität, mit einem zylindrischen Metallkörper (1), einer zylindrischen Hochspannungselektrode (2), die koaxial zum Körper im Inneren des Körpers liegt, und mit mindestens zwei Niederspannungselektroden (3), die gegen die Innenwand des Körpers unter Zwischenfügung einer Isolierschicht (4) angedrückt werden, wobei die Elektroden bezüglich der geometrischen Achse des Körpers symmetrisch angeordnet sind und die Niederspannungselektroden (3) durch Mittel gehalten werden, die ihnen eine freie Ausdehnung erlauben, wobei das dielektrische Milieu zwischen der Hochspannungs- und den Niederspannungselektroden (2, 3) ein Gas oder Vakuum ist, wobei der Ausdehnungskoeffizient ac des Körpers dem Ausdehnungskoeffizienten ah der Hochspannungselektrode gleicht, während der Ausdehnungskoeffizient ac des Materials des Körpers mit dem Ausdehnungskoeffizienten ab des Materials der Niederspannungselektroden (3) durch folgende Ungleichheit verknüpft ist:
$$1,5 < ab/ac < 2,5.$$

**2.** Kondensator nach Anspruch 1, dadurch gekennzeichnet, daß das Material des Körpers (1) unter den Aluminiumlegierungen ausgewählt wird.

**3.** Kondensator nach einem der Ansprüche 1 und 2, dadurch gekennzeichnet, daß das Material der Niederspannungselektroden (3) unter den rostfreien Stählen ausgewählt wird.

**4.** Kondensator nach einem der Ansprüche 1 bis 3, dadurch gekennzeichnet, daß er vier Paare von Niederspannungselektroden (3) besitzt.

**5.** Kondensator nach einem der Ansprüche 1 bis 4, dadurch gekennzeichnet, daß an jeder Niederspannungselektrode (3) mindestens eine Metallasche (9) befestigt ist, die ein Loch (8) des Körpers durchdringt, wobei mindestens eine dieser Laschen für den elektrischen Anschluß verwendet wird.

**6.** Kondensator nach einem der Ansprüche 1 bis 5, dadurch gekennzeichnet, daß die Mittel mindestens eine Feder (10A, 10B) in Form eines Stahlstifts enthalten, der in seiner Mitte an der Außenwand des Körpers (1) befestigt ist und zwei der Laschen (9A, 9B) durchquert, die sich in einer gemeinsamen Querschnittsebene des Körpers befinden.

**7.** Kondensator nach Anspruch 6, dadurch gekennzeichnet, daß die Feder (10A) in einer Rille (IIA) in der äußeren Oberfläche des Körpers (1) liegt.

**8.** Kondensator nach einem der Ansprüche 6 und 7, dadurch gekennzeichnet, daß die Laschen und Federn elektrisch gegeneinander isoliert sind, insbesondere durch isolierende Hülsen (13A, 13B).

**9.** Kondensator nach einem der Ansprüche 1 bis 5, dadurch gekennzeichnet, daß die Mittel mindestens einen Stab (15), der zwei der Laschen (9A, 9C) durchquert, welche sich auf einer gemeinsamen Mantellinie des Körpers befinden, sowie Federn (16A, 16C) enthalten, die sich einerseits am Körper (1) und andererseits am Stab (15) abstützen, um auf die Laschen eine zentrifugale und radiale Kraft auszuüben.

**10.** Kondensator nach Anspruch 1, dadurch gekennzeichnet, daß die Mittel zum Halten der Niederspannungselektroden (3) metallische Laschen (50) enthalten, die den Körper (1)) durchdringen und paarweise mit einem Federstift (51) zusammenwirken, der sich auf einem an der Außenoberfläche des Körpers (1) befestigten isolierenden Pflock (52) abstützt.

11. Kondensator nach einem der Ansprüche 1 bis 10, dadurch gekennzeichnet, daß der Körper auf seiner inneren Oberfläche Klötze (14A, 14C, 24A, 24C) zur Begrenzung der Verschiebung der Niederspannungselektroden besitzt.

12. Kondensator nach einem der Ansprüche 1 bis 5, dadurch gekennzeichnet, daß die Mittel mindestens zwei isolierende Stützen (20A, 20B, 20C) besitzen, die je einen Schaft und eine Kopf enthalten und in einer Querschnittsebene des den Körper (1) bildenden Zylinders liegen, wobei die Schäfte durch Löcher in den Niederspannungselektroden und dem Körper verlaufen, während die Köpfe auf der Innenseite des Körpers (1) angeordnet sind und wobei die beiden Stützen eines Paares von einer Feder (21) nach Art eines Stahlstifts durchquert werden.

13. Abgeschirmte Station mit einer dichten Metallhülle, die mit einem dielektrischen Gas unter Druck gefüllt ist und in der Geräte wie z.B. Trennschalter, ein Leistungsschalter und Stromschienen untergebracht sind, wobei die Station einen kapazitiven Teiler mit zwei Kondensatoren und einem Operationsverstärker für die Messung der Spannung eines der Geräte besitzt, dadurch gekennzeichnet, daß einer der Kondensatoren (C1) gemäß einem der Ansprüche 1 bis 12 ausgebildet ist.

14. Station nach Anspruch 13, dadurch gekennzeichnet, daß der Körper des Kondensators (C1) einen metallischen Boden (1A) besitzt, der an eine Innenwand der Hülle angeschweißt ist, wobei die Hochspannungselektrode (1) am Boden (1A) über einen Isolator (46) befestigt und über einen Anschluß (47) an das elektrische Gerät (43) angeschlossen ist, dessen Spannung gemessen werden soll.

## Claims

1. A capacitor having high stability with temperature comprising a cylindrical metal body (1), a cylindrical high tension electrode (2) coaxial with the body and placed inside it, and at least two low tension electrodes (3) constrained to remain in contact against the inside wall of the body via an intervening insulating layer (4), said electrodes being disposed symmetrically about the geometrical axis of the body, said low tension electrodes (3) being held in place by retaining means that allow them to expand freely, the dielectric medium extending between the high tension electrode (2) and the low tension electrodes (3) being a gas or a vacuum, the expansion coefficient $\alpha c$ of the body being equal to the expansion coefficient $\alpha h$ of the high tension electrode, and the expansion coefficient $\alpha c$ of the body material being related to the expansion coefficient $\alpha b$ of the material of the low tension electrodes (3) by the following inequalities:

$$1.5 < \alpha b/\alpha c < 2.5.$$

2. A capacitor according to claim 1, characterized in that the body material (1) is selected from aluminum alloys.

3. A capacitor according to claim 1 or 2, characterized by the fact that the material of the low tension electrodes (2) is selected from stainless steels.

4. A capacitor according to any one of claims 1 to 3, characterized in that it comprises four pairs of low tension electrodes (3).

5. A capacitor according to any one of claims 1 to 4, characterized in that each low tension electrode (3) is fixed to at least one metal tab (9) passing through a hole (8) of the body, at least one of said tabs being used for electrical connection purposes.

6. A capacitor according to any one of claims 1 to 5, characterized in that said means comprise at least one spring (10A, 10B) of the piano wire type, secured in the middle to the outside wall of the body (1), and passing through two of said tabs (9A, 9B) disposed on the same right cross-section of the body.

7. A capacitor according to claim 6, characterized in that said spring (10A) is disposed in a groove (11A) formed in the outside surface of the body (1).

8. A capacitor according to claim 6 or 7, characterized in that the tabs and the springs are electrically insulated from one another, in particular by means of insulating sleeves (13A, 13B).

9. A capacitor according to any one of claims 1 to 5, characterized in that said means comprise at least one rod (15) passing through two of said tabs (9A, 9C) disposed on a common generator line of the body, and by springs (16A, 16C) bearing firstly against the body (1) and secondly against the rod (15) so as to apply an outwardly-directed radial force on the tabs.

10. A capacitor according to claim 1, characterized in that the retaining means for holding the low tension electrodes (3) comprise metal tabs (50) passing through the body (1) and co-operating in pairs with respective piano wires (51) bearing on an insulating bar (52) fixed to the outside surface of the body (1).

11. A capacitor according to any one of claims 1 to 9, characterized in that the body carries pads (14A, 14C, 24A, 24C) on its inside face to limit movement of the low tension electrodes.

12. A capacitor according to any one of claims 1 to 5, characterized that the retaining means comprise at least one pair of insulating studs (20A, 20B, 20C) each possessing a shank and a head and extending along a right cross-section of the cylinder constituting the body (1), said shanks passing through the low tension electrodes and the body via holes formed therein, the heads being placed on the inside of the body (1), and the two pads in a pair having a corresponding piano wire type spring (21) passing through them.

13. A metal-clad station comprising a gastight metal enclosure filled with dielectric gas under pressure inside which there are disposed apparatuses such as section switches, circuit breakers, and sets of busbars, said station being provided with a capacitive stepdown bridge comprising two capacitors associated with an amplifier for the purpose of measuring the tension of one of said apparatuses, the station being characterized in that one of said capacitors (C1) is made according to any one of claims 1 to 12.

14. A capacitor installed in a metal-clad station according to claim 12 [13], characterized in that the body of the capacitor (C1) possesses a metal end (1A) bonded to the inside of the enclosure on a wall thereof, the high tension electrode (1) being fixed to said end (1A) via an insulator (46) and being connected to the electrical apparatus (47) whose tension is to be measured via a collection (43).

# FIG.1

# FIG.2

# FIG.3

# FIG.4

# FIG.5

# FIG.6

# FIG.7

# FIG.8

# FIG.9

# FIG.10

# FIG.11

# FIG.12